Europäisches Patentamt

European Patent Office

Office européen des brevets

(19)

(11) Publication number: **0 157 442**
**B1**

# (12) EUROPEAN PATENT SPECIFICATION

(45) Date of publication of patent specification: **01.06.88**

(51) Int. Cl.⁴: **A 23 L 3/36**, A 23 L 1/216

(21) Application number: **85200317.7**

(22) Date of filing: **05.03.85**

(54) **A process method and a device for the preparation of deep frozen preservable meals, and produce obtained by said method.**

(30) Priority: **08.03.84 NL 8400739**

(43) Date of publication of application:
**09.10.85 Bulletin 85/41**

(45) Publication of the grant of the patent:
**01.06.88 Bulletin 88/22**

(84) Designated Contracting States:
**AT BE CH DE FR GB IT LI LU SE**

(56) References cited:
**DE-A-2 624 391**
**US-A-3 774 524**

(73) Proprietor: **Fri d'Or B.V.**
**Kade 10 Postbox 394**
**NL-4600 AJ Bergen op Zoom (NL)**

(72) Inventor: **van der Wiel, Aart Marius Leendert**
**W. de Goedeweg 10**
**NL-3331 KT Zwijndrecht (NL)**

(74) Representative: **Siemens, Andreas Meinhard**
**Ernest, Dipl.-Ing.**
**SIEMENS & CIE. Roskam 8**
**NL-4813 GZ Breda (NL)**

Courier Press, Leamington Spa, England.

## Description

The invention relates to a process method and an appliance for the preparation of preservable deep-frozen meals which should merely be removed from the package, put into a frying pan with some fat and heated up with stirring, after which these are ready for consumption.

The invention also relates to the product so prepared. So-called "instant meals" and "plates" are already known.

There is an increasing demand for such products, but disadvantages are the poor appearance, the restricted preservability and the fact that the product should be heated in an oven during about 45 minutes, while in most cases it does not comprise the completeness of components desired, and it is not blended in such a manner that it might be served but for additional treatment.

Moreover the so-called plates consist of little vegetables and potatoes and of relatively too much meat, and after heating the degree of state of being done of the several components is mostly divergent, such that the vegetables are overdone for example, while the meat is not sufficiently done, and the potatoes are partly overdone and yet partly locally raw.

Potatoes as a whole and in larger pieces are not very freeze-proof, since they might become glassy at subsequent heating.

This is particularly relevant for certain potato varieties being cultivated in zones of moderate climate, to such an extent that these appeared to be less suitable for the conventional treatment with machine processing units.

Investigations have been carried out to find an instant meal composition appropriate for deep freezing and for storage during extensive periods of time, keeping a good appearance and good properties in terms of taste and nutritional value while no additional treatment should be necessary.

In the DE—A—26.24.391 a process of producing a frozen potato protect is described.

However said process leads to a product with properties which are not exactly predictable and which might vary within wide bounds. Surprisingly it has now been found that an optimal nutritive value, taste, smell, colour and shape depend mainly from the control of moisture content of the potato pieces, which influences the gelification, blanching and unstaining of the farinaceous components.

Furthermore the kind and percentage of blending of the constituents and ingredients have been determined empirically in time-consuming experiments.

It has been found that the glassiness and loss of relish can be obviated by the sequence of process steps and the parameters according to the present invention.

It has been discovered that by the use of a certain sequence of treatment stages of steam-pealed, brushed and cut potato parts, a product can be obtained which, compounded with deep frozen cut onions, paprika, green garden peas, corn, leek and carrots or parsnip gives a savoury instant meal, which is well-preservable in a deep frozen state and which is directly consumable after warming up.

The process method for the preparation of deep frozen preservable meals, consisting of potatoes and vegetables, and which can be taken from the packaging and be consumed directly after warming up, is characterized according to the present invention, in that potatoes, after washing and peeling with steam and brushing, are subjected to cutting by a device of knife blades, the cut produce being dewatered and blanched in a combined conveyor blanching vat during 5—6 minutes at about 75°C, subsequently cooled with rinsing water in a counter-current cooler down to 25°—30°C, the cooled strips blanched once more in water in a screw type blanching device during 5—6 minutes at 75°—80°C, predried in a three-stage hot air conveyor drier to a final moisture content of about 75%, the dried strips are fried in hardened vegetable fat during about 60 seconds at 175°—185°C, the cuttings are precooled with atmospheric air on a conveyor cooler to 15°C and subsequently frozen in a conveyor-freezer to —15°C, after which the cut product is sorted at the length desired, mixed in its deep frozen state in a mixing drum with deep frozen onions, paprika, green peas, corn, leek and carrots, and the mix is weighed and packed.

The blanching is necessary to deactivate enzymes.

The proportion of the components is preferably as follows:

| potato strips | 40% by weight |
| carrots | 18% by weight |
| leek | 12% by weight |
| corn | 6% by weight |
| onions | 6% by weight |
| paprika | 6% by weight |
| green peas | 12% by weight. |

With this method of processing, damage and decrease of quality are prevented.

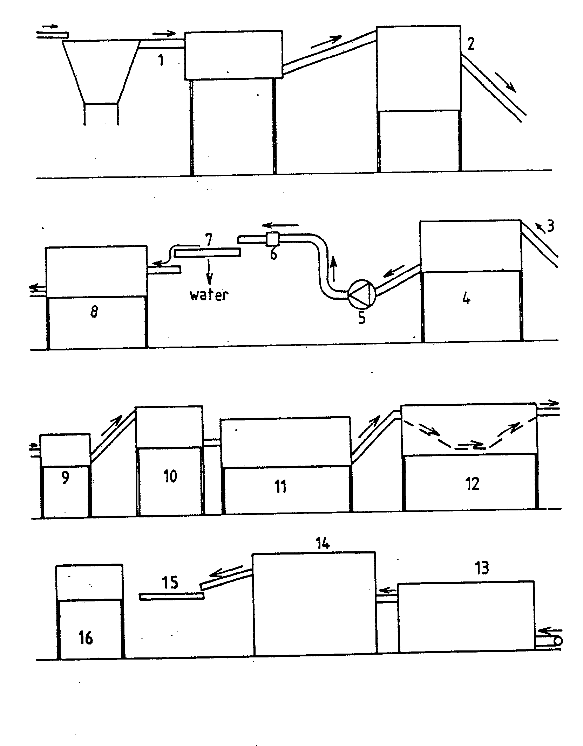

The installaion for the process is schematically shown in the enclosed drawing.

Therein (1) is the washing station, (2) is the steam peeling device, (3) a conveyor with brushes, (4) an after-washer, (5) a water pump, (6) a consistent knife blade block, (7) a dewatering station, (8) a blanching conveyor, (9) a counter-current cooler, (10) a screw blanching device, (11) a three-stage conveyor drier, (12) a frying pan, (13) a cooler-conveyor, (14) freezer-conveyor, (15) a sorting screen-strainer, and (16) a slowly rotating mixing drum for composing all the components.

The product obtained can be packed upon vacuum-drawn dishes or plates of hard polystyrene with sealed film, or in plastic bags.

During blanching and all other preparatory treatment stages crumbling ought to be prevented.

Product damage influences the appearance of instant meals, and therefore it has been tested how such detrimental influences, by mechanical transport, storage in bags, and by sun, light and moisture, could be eliminated.

Cleaning, sorting and treatment on appropriate conveyors as described have proved to be favourable for the handling of composed food mixtures, if carried out with special care.

The behaviour of free flowing food materials during transport in processing circumstances has been studied by N. N. Mohensenin and published in "Physical Properties of plant and animal materials" (Gordon & Breach, New York, 1970).

According to the above described method care is taken and measures can be observed to prevent damage of the constituents of the food such that the meal will comply with exigences of national and international authorities.

## Claims

1. A process method for the preparation of deep-frozen preservable food consisting of potato and vegetable produce, with control of the moisture content of the potato strips, characterized in the combination of the specific steps, that potatoes are washed and peeled with steam, brushed and cut with a consistent knife blade block, that the cut product is dewatered and blanched in a conveyor blancher during 5—6 minutes at about 75°C, subsequently cooled down to 25—30°C in a counter-current cooler, the cooled strips are blanched once more in water in a screw-type blancher, during 5—6 minutes at 75°—80°C, predried in a three-stage hot-air conveyor-drier until a final moisture content of about 75%, the dried strips are fried in hardened vegetable fat during about 60 seconds at 175°—185°C, the cut product is precooled to about 15°C with atmospheric air upon a conveyor-cooler and subsequently frozen in a conveyor-freezer to −15°C, after which the cut product is sorted in a strainer at the length size as desired, mixed in deep-frozen state in a mixing drum with deep-frozen onions, paprika, green garden peas, corn, leek and carrots and the mix is weighed, packed and stored in deep-frozen state.

2. A combination of units for the process method according to claim 1, characterized by a processing sequence of a washing station (1), a steam peeling device (2), a brusher-conveyor (3), an after washer (4), a pump (5), a block of knife blades (6), a dewatering station (7), a conveyor blancher (8), a counter current cooler (9), a screw type blancher (10), a three-stage conveyor-drier (11), a frying pan (12), a conveyor-cooler (13), a conveyor-freezer (14), a sorting screen strain (15) and a mixing drum (16).

3. A product obtained with the process method according to claim 1, and with the combination of units according to claim 2 respectively, characterized in that the composition of the product is as follows:

| | |
|---|---|
| Prepared potato strips: | 40% by weight. |
| Carrots: | 18% by weight. |
| Leek: | 12% by weight. |
| Corn: | 6% by weight. |
| Onions: | 6% by weight. |
| Paprika: | 6% by weight. |
| Garden Peas: | 12% by weight. |

## Patentansprüche

1. Verfahren zur Zubereitung von tiefgefrorenen konservierbaren Gerichten, bestehend aus Kartoffel- und Gemüse- erzeugnissen mit Einstellung des Feuchtigkeitsgehaltes der Kartoffelschnipsel, gekennzeichnet durch die Kombination der gesonderten Stufen des Waschens und Schälens der Kartoffeln mit Dampf, des Bürstens und Schneidens mit einem Block mit feststehenden Messerschneiden, des Entwässerns des geschnittenen Produktes und des Blanchierens auf dem Transportband im Blanchiergerät während 5—6 Minuten bei etwa 75°C, gefolgt durch Abkühlung auf 25—30°C in einem Gegenstromkühler, nochmaligem Blanchieren in Wasser in einem Schnekentransport-Blanchierer während 5—6 Minuten bei 75—80°C, vortrocknen in einem Dreizonen Warmluft-Transportband-Trockner bis zum Endfeuchtigkeitsgehalt von etwa 75%, worauf die getrockneten Schnipsel gebacken werden in gehärtetem pflanzlichem Fett während etwa 60 Sekunden bei 175°C—185°C, das geschnittene Erzeugnis vorgekühlt wird auf etwa 15°C mit atmosphärischer Luft auf einem Transportbandkühler und nachfolgend eingefroren wird im Transportband-Friergerät bis −15°C, worauf das geschnittene Produkt durch ein Sieb sortiert wird auf die gewünschte Länge, dann gemischt wird in tiefgefrorenem Zustand in einer Mischtrommel mit tiefgefrorenen Zieblen, Paprika, grünen Gartenerbsen, Mais, Pomee und Karotten, und abgewogen, verpackt und gelagert wird im tiefgefrorenen Zustand.

2. Kombination von Geräten für das Verfahren gemäss Anspruch 1, gekennzeichnet durch eine auf einander folgende Aufstellung eines Wäschers (1), einem Dampfschälgerät (2), einem Transportband mit Bürsten (3), einem Nachspüler (4), einer Pumpe (5), einem Block mit Messerschneiden (6), einem Entwässerungsgerät (7), einem Blanchiergerät (8), durch das das Transportband verläuft, einem Gegenstromkühler (9), einem Schneckentransportblanchierer (10), einem dreistufigen Transportband-Trockner (11), einem Bratkassel (12), einem Transportbandkühler (13), einem Transportband-Gefriergerät (14), einem Sortiersieb (15) und einer Mischtrommel (16).

3. Ein Erzeugnis erhalten mittels des Verfahrens gemäss Anspruch 1, bezw, mit der Kombination der Geräte nach Anspruch 2, dadurch gekennzeichnet dass die Zusammensetzung des Produkts wie folgt ist:

Aufbereitete Kartoffelschnipsel:   40 Gew.%
Karotten:   18 Gew.%
Porree:   12 Gew.%
Mais:   6 Gew.%
Zwiebeln:   6 Gew.%
Paprika:   6 Gew.%
Grüne Erbsen:   12 Gew.%.

**Revendications**

1. Un procédé pour la préparation des repas surgelés et préservables, se composant d'un produit de pommes de terre et de légumes, avec réglage de la teneur en eau des tranches de pommes de terre, caractérisé par la combinaison des pas spécifies du lavage et de l'épluchement à l'amenée de vapeur, du brossage et coupage sous un bloc de portelames consistant, ensuite le produit coupé est déshydraté et blanchi dans un blanchisseur avec transporteur roulant pendant 5—6 minutes à 75°C environ, puis refroidi à 25—30°C dans un installation réfrigérante à contre-courant, les tranches refroidies sont blanchies encore une fois dans l'eau d'un blanchisseur à vis pendant 5—6 minutes à 75—80°C, préséchées dans un séchoir avec transporteur roulant en trois étages dans l'air chauffé jusqu'à une teneur en eau finale de 75% environ, les tranches séchées soit frites dans la graisse végétale endurée pendant 60 secondes à 175—185°C, le produit rogné est prérefroidi à 15°C environ avec l'air atmosphérique à l'aide d'un refroidisseur avec transporteur roulant et ensuite congelé dans un congélateur avec transporteur roulant jusqu'à −15°C, et après cela le produit coupé est assorti dans un trieur à la mesure longitudinale comme désirée, mélangé surgélé dans un mélangeur avec des oignons, paprika, petit pois verts, maïs, poireau et carottes, et le mélange est pesé, emballé et emmagasiné en condition surgelée.

2. Une composition de dispositifs pour la méthode du procédé selon la revendication 1, caractérisée par une suite de processus d'un lavoir (1), d'un dispositif d'épluchement à vapeur (2), d'un dispositif de brossage avec transporteur (3), d'un dispositifs de lavage subséquent (4), d'une pompe (5), d'un bloc de porte-lames (6), d'un dispositif de déshydratage (7), d'un blanchisseur avec transporteur (8), d'une installation réfrigérante à contre-courant (9), d'un blanchisseur à vis (10), d'un séchoir avec transporteur roulant en trois étages (11), d'une installation de friture (12), d'un appareil de réfrigération (13), d'un congélateur avec transporteur roulant (14), d'un trieur (15) et d'un mélangeur (16).

3. Un produit obtenu par la méthode du procédé selon la revendication 1, et à l'aide de la composition de dispositifs selon la revendication 2 respectivement, caractérisé en ce que la composition dudit produit est comme suit:

| | |
|---|---|
| tranches de pommes de terre preparées: | 40% de poids |
| carrottes: | 18% de poids |
| poireaux: | 12% de poids |
| maïs: | 6% de poids |
| oignons: | 6% de poids |
| paprika: | 6% de poids |
| petits pois verts: | 12% de poids. |

water